# EUROPÄISCHE PATENTSCHRIFT

(11) **EP 0 332 836 B1**
(45) Veröffentlichungstag und Bekanntmachung des Hinweises auf die Patenterteilung: **03.11.1993**
(21) Anmeldenummer: 89101983.8
(22) Anmeldetag: 04.02.1989
(51) Int. Cl.: H01S 3/121

(54) **Verfahren und Vorrichtung zur Erzeugung kurzer Laserpulse**
Short laser pulse generation method and apparatus
Procédé et appareil pour engendrer des impulsions laser plus courtes

(30) Priorität: 12.03.1988 DE 3808378
(43) Veröffentlichungstag der Anmeldung: 20.09.1989
(73) Patentinhaber: AESCULAP AG, D-78501 Tuttlingen (DE)
(72) Erfinder: Huber, Manfred, D-7206 Emmingen-Liptingen 1 (DE); Grom, Elmar, D-7202 Mühlheim (DE); Wrobel, Walter-Gerhard, D-7200 Tuttlingen (DE)
(74) Vertreter: Hoeger, Stellrecht & Partner

(56) Entgegenhaltungen:
- US-A- 3 281 712
- US-A- 3 483 482
- US-A- 3 711 791
- US-A- 3 829 791

## Beschreibung

Die Erfindung betrifft ein Verfahren und eine Vorrichtung zur Erzeugung kurzer Laserpulse mit Hilfe eines Dauerstrich-Festkörperlasers, der einen in einem Resonator zwischen Spiegeln angeordneten Laserkristall und eine diesen mit Strahlung beaufschlagende Pumplampe umfaßt, die mit unterschiedlich großen Strömen betrieben wird, wobei sie ab Erreichen eines Schwellstromes den Laserkristall ausreichend bestrahlt, um diesen zur Aussendung von Laserstrahlung anzuregen.

Bei Dauerstrich-Festkörperlasern, beispielsweise bei Nd:YAG-Lasern, die zu medizinischen und anderen Zwecken eingesetzt werden, ist es bekannt, kurze Laserpulse dadurch zu erzeugen, daß mechanische Strahlunterbrecher in den Laserstrahlengang eingeschwenkt und für die Dauer der gewünschten Pulslänge geöffnet werden. Die minimalen Pulsdauern derartiger Laser betragen etwa 100 Millisekunden und sind durch die Ansprechzeit der mechanischen Strahlunterbrecher bestimmt. Kürzere Pulsdauern sind auf diese Weise nicht zuverlässig zu erreichen.

Es ist bei Dauerstrich-Festkörperlasern auch nicht möglich, kurze Impulse dadurch zu erzeugen, daß die Pumpquelle den Laserkristall nur mit entsprechend kurzen Pumpstrahlungspulsen beaufschlagt, da sich durch das Auftreffen der Pumpstrahlung auf den Laserkristall dessen optische Eigenschaften so stark ändern, daß Laserstrahlung mit den gewünschten optischen Eigenschaften nicht erhalten werden kann. Dies liegt daran, daß die Laserkristalle durch die Strahlung der Pumplampen einerseits stark erhitzt werden, daß andererseits aber eine sehr effektive Kühlung für den Laserkristall vorgesehen ist, beispielsweise eine Wasserkühlung, so daß sich im Laserkristall eine Temperaturverteilung aufbaut, durch die der Laserkristall Verformungen ausgesetzt ist. Der Laserkristall erhält dadurch die Wirkung einer thermischen Linse, die die Laserstrahlung fokussiert. Diese thermische Linsenwirkung muß durch geeignete Wahl der Krümmungsradien der Laserspiegel ausgeglichen werden; allerdings ist dies im allgemeinen nur teilweise möglich. Erhöht man den Betriebsstrom der Pumplampen, dann werden die Laserbedingungen für den Laserkristall im allgemeinen dann erreicht, wenn die Wirkung der thermischen Linse von den Resonatorspiegeln kompensiert wird. Vom Einschalten der Pumpstrahlung bis zum Erreichen dieses thermischen Gleichgewichtszustandes vergehen in der Regel Zeiten in der Größenordnung von circa 1 Sekunde. Erhöht man daher plötzlich den Betriebsstrom einer Pumplampe von einem Wert unterhalb des Schwellstroms auf einen Wert oberhalb desselben, so folgt die Laserleistung im allgemeinen nur mit einer Zeitverzögerung in der Größenordnung von 0,5 bis 2 Sekunden, da sich erst die aufgrund der erhöhten Pumpleistung entsprechende thermische Linsenkonfiguration aufbauen muß. Aus diesem Grund ist es nicht möglich, durch ein kurzzeitiges Erhöhen des Betriebsstromes der Pumplampe von einem unter dem Schwellstrom liegenden Stand-By-Wert die Laserleistung entsprechend schnell zu erhöhen, das heißt auf diese Weise können kurze Laserpulse nicht erzeugt werden.

In bisher verwendeten Lasergeräten wurden deshalb zwischen den einzelnen Pulsen Betriebsströme für die Pumplampe gewählt, die über dem Schwellstrom lagen und Laserpulse wurden ausgelöst, indem gleichzeitig der Lampenstrom erhöht und mechanische Unterbrecher aus dem Laserstrahlengang entfernt wurden. Die kürzest mögliche Pulsdauer ist jedoch bei derartigen Verfahren, die mechanische Unterbrecher verwenden, bei circa 20 Millisekunden erreicht.

Es ist Aufgabe der Erfindung, ein gattungsgemäßes Verfahren anzugeben, mit dem es möglich wird, trotz Verwendung relativ träger, mechanischer Unterbrecher Laserpulse mit wesentlich kürzerer Dauer zu erzeugen.

Diese Aufgabe wird bei einem Verfahren der eingangs beschriebenen Art erfindungsgemäß durch die kennzeichnenden Merkmale des Patentanspruches 1 gelöst.

Eine Vorrichtung zur Erzeugung von Laserstrahlungsimpulsen ist Gegenstand der Patentansprüche 4 bis 6.

Bei dem neuen Verfahren hält man den Betriebsstrom der Pumplampe zwischen den Pulsen auf einem Wert oberhalb des Schwellstromes, so daß durch die auf den Laserkristall auffallende Strahlung dessen Temperatur und damit dessen thermische Linsenkonfiguration dem Zustand entsprechen, der sich bei einem Dauerbetrieb einstellen würde. Gleichzeitig wird aber die Laserstrahlung unterbrochen, vorzugsweise durch Einbringen einer Blende in den Resonator, also durch mechanische Unterbrechung.

Zur Erzeugung eines Laserpulses wird der Betriebsstrom der Pumplampe unter den Schwellstrom abgesenkt, und gleichzeitig oder kurz danach wird der Laserstrahlengang freigegeben, das heißt, der mechanische Unterbrecher entfernt. Sobald der Laserstrahlengang freigegeben ist, erhöht man den Betriebsstrom der Pumplampe für die gewünschte Pulsdauer, anschließend wird der Betriebsstrom wieder unter den Schwellstrom abgesenkt, so daß die Laserstrahlung unterbrochen wird. Nach Einbringen des Unterbrechers in den Resonator wird dann bis zur Erzeugung des nächsten Laserpulses der Betreibsstrom der Pumplampe wieder über den Schwellstrom erhöht.

Durch diese Verfahrensweise wird sichergestellt, daß die thermische Linsenkonfiguration des Laserkristalls vor Erzeugung des Laserpulses eintritt, da die Pumplampe im Stand-By-Betrieb mit einem Betriebsstrom betrieben wird, der oberhalb des Schwellstromes liegt, es kann sich also ein thermischer Gleichgewichtszustand einstellen, der dem Laserbetrieb entspricht.

Während der Freigabe des Laserstrahlenganges, die bei Entfernung eines mechanischen Unterbrechers eine gewisse Zeit in Anspruch nehmen kann, beispielsweise 20 Millisekunden, wird eine Laserwirkung dadurch verhindert, daß der Betriebsstrom der Pumplampe während dieses Zeitraumes unter den Schwellstrom abgesenkt ist. Es ist daher nicht wichtig, wie lange dieser Vorgang dauert, solange der Vorgang nur innerhalb eines Zeitraumes abläuft, in dem sich der während des Stand-By-Betriebes erreichte thermische Gleichgewichtszustand des Laserkristalles nicht stark verändert. Da die Zeitkonstante für die Veränderung dieses thermischen Zustandes in der Größenordnung von 1 Sekunde liegt, während die Öffnungszeiten des mechanischen Unterbrechers normalerweise etwa 20 Millisekunden betragen, ist diese Voraussetzung erfüllt.

Wenn nach Entfernen des Unterbrechers im Laserstrahlengang nunmehr der Betriebsstrom der Pumplampe erhöht wird, befindet sich der Laserkristall bereits in seinem thermischen Gleichgewichtszustand, so daß die Laserstrahlung praktisch verzögerungsfrei einsetzen kann und solange andauert, wie der Betriebsstrom der Pumplampe oberhalb des Schwellstromes liegt. Der Anstieg der Laserstrahlungleistung wird also im wesentlichen durch den Anstieg der Leistung der Pumplampe bestimmt, und dieser Anstieg hängt wiederum nur von dem für die Pumplampe verwendeten elektrischen Versorgungsgerät ab. Diese Anstiegszeiten können sehr kurz gewählt werden, so daß es auf diese Weise gelingt, Laserpulse mit sehr kurzer Anstiegszeit zu erzeugen, die dann auch entsprechend kurz gewählt werden können. Dabei ist wesentlich, daß auch das Abschalten des Laserpulses nicht durch mechanische Unterbrechungsmittel erfolgt, sondern allein durch Absenken des Betriebsstromes der Pumplampe unter den Schwellstrom. Die nachfolgende Unterbrechung des Laserstrahlenganges mittels mechanischer Unterbrecher kann wieder länger dauern, da die Laserwirkung durch den unterhalb des Schwellstrom liegenden Betriebsstrom der Pumplampe unterdrückt bleibt. Erst wenn der mechanische Unterbrecher in den Laserstrahlengang eingebracht ist, wird der Betriebsstrom der Pumplampe wieder über den Schwellstrom erhöht, um auf diese Weise bis zur Erzeugung des nächsten Laserpulses die thermischen Gleichgewichtsbedingungen des Laserkristalls aufrechtzuerhalten.

Bei einer bevorzugten Ausführungsform kann vorgesehen sein, daß man den Betriebsstrom der Pumplampe zwischen den Pulsen nur geringfügig über den Schwellstrom erhöht und er dabei geringer ist als der Betriebsstrom der Pumplampe während des Pulses.

Es gelingt mit diesem Verfahren, mit einem Dauerstrich-Festkörperlaser sehr kurze Laserpulse zu erzeugen, deren Dauer beispielsweise in der Größenordnung von 1 Millisekunde liegt. Durch diese Pulse werden neue Anwendungen denkbar, insbesondere im Gebiet der chirurgischen Anwendungen. So ist es möglich, mit einem solchen Laser eine Materialüberhitzung zu erzielen, die durch das plötzliche Auftreten von mechanischen Spannungen zu einer Fragmentation von Steinen führt, beispielsweise von Nierensteinen. Es wäre auch möglich, Mikroanastomosen mit minimaler thermischer Schädigung des umliegenden Gewebes zu erzeugen.

Auf anderen Anwendungsgebieten läßt sich das Verfahren zum Beispiel zum punktweisen Mikroschweißen mit minimaler thermischer Sekundärschädigung einsetzen.

Die nachfolgende Beschreibung einer bevorzugten Ausführungsform der Erfindung dient im Zusammenhang mit der Zeichnung der näheren Erläuterung. Es zeigen:
- Figur 1:: eine schematische, perspektivische Ansicht eines Laserresonators und
- Figur 2:: ein Diagramm des zeitlichen Verlaufes des Pumplampen-Betriebsstromes und des Öffnungszustandes des mechanischen Unterbrechers.

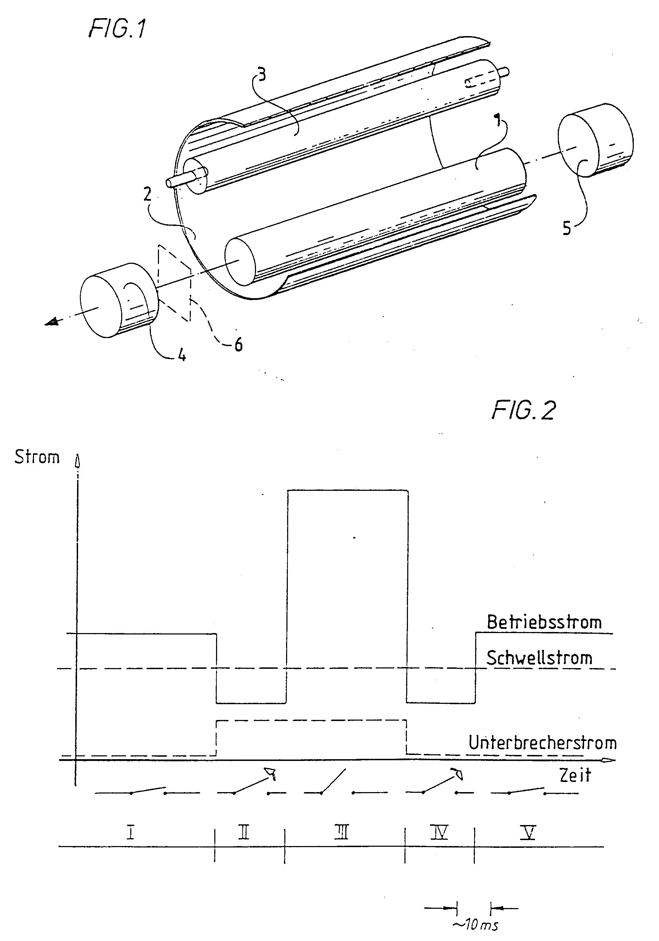

In Figur 1 sind schematisch die wichtigsten Teile eines Festkörperlasers dargestellt. Dieser umfaßt einen stabförmigen Festkörperkristall 1, beispielsweise einen Nd:YAG-Kristall, der sich in einer Pumpkammer 2 befindet, in der außerdem eine Pumplampe 3 angeordnet ist. Die Pumplampe 3 kann eine Bogenlampe sein, die mittels in der Zeichnung nicht dargestellter Netzgeräte mit der notwendigen Betriebsspannung und dem notwendigen Betriebsstrom versorgt wird. Die Pumplampe 3 erstreckt sich parallel zu dem stabförmigen Festkörperkristall 1 über dessen gesamte Länge, so daß von der Pumplampe 3 erzeugte Strahlung über die gesamte Länge des Festkörperkristalles 1 auf diesen auftrifft.

An beiden Stirnseiten des Festkörperkristalls 1 ist jeweils ein Spiegel 4 beziehungsweise 5 angeordnet, die zusammen einen Resonator für die Laserstrahlung bilden. Einer der beiden Spiegel ist totalreflektierend, während der andere einen Teil der auf ihn auftreffenden Laserstrahlung hindurchläßt und somit aus dem Resonator auskoppelt.

Zwischen einen der beiden Spiegel, beispielsweise den Spiegel 4 und den Festkörperkristall 1, ist eine Blende 6 oder ein die Laserstrahlung absorbierendes Filter einbringbar, so daß der Strahlengang der aus dem Festkörperkristall 1 austretenden und auf den Spiegel 4 gerichteten Laserstrahlung unterbrochen ist. Die Blende 6 kann mittels geeigneter, in der Zeichnung nicht dargestellter Antriebsmittel aus dem Laserstrahlengang entfernt werden, beispielsweise ausgeschwenkt werden, so daß dann die vom Festkörperkristall 1 ausgesandte Laserstrahlung ungehindert auf den Spiegel 4 auftreffen kann.

Zur Erzeugung kurzer Laserpulse wird der in Figur 1 dargestellte Laser zeitlich so betrieben, wie es im folgenden anhand des Diagramms der Figur 2 erläutert wird. Zunächst wird die Blende 6 in den Strahlengang eingebracht, so daß der Laserstrahlengang unterbrochen ist. Dies ist im Diagramm der Figur 2 unterhalb der Zeitachse symbolisch durch einen Schalter dargestellt, der in einer Versorgungsleitung des Bewegungsmechanismus der Blende 6 angeordnet ist. Ist dieser Schalter geschlossen, wird die Blende in den Strahlengang eingefahren, ist er geöffnet, wird die Blende 6 dagegen aus dem Laserstrahlengang entfernt.

In der zunächst erörterten Anfangsphase I (Figur 2) ist also die Blende 6 in den Strahlengang eingefahren und der Betriebsstrom (obere ausgezogene Kurve, Figur 2) der Pumplampe 3 wird auf einen Wert oberhalb des Schwellstromes eingestellt. Der Schwellstrom der Pumplampe ist der Wert, bei dem die Pumplampe den Laserkristall im Dauerbetrieb gerade zu der Aussendung von Laserstrahlung anregen kann, bei einem niedrigeren Betriebsstrom werden die Laserbedingungen für den Festkörperkristall nicht erreicht.

Der in der Betriebsphase I eingenommene Betriebszustand kann über einen längeren Zeitraum beibehalten werden, er wird daher als Stand-By-Betrieb bezeichnet.

Wenn ein Laserpuls erzeugt werden soll, wird zunächst der Betriebsstrom der Pumplampe unter den Schwellstrom abgesenkt (Betriebsphase II, Figur 2), wobei es dabei genügt, den Betriebsstrom geringfügig unter den Schwellstrom abzusenken. Gleichzeitig wird der dem Bewegungsmechanismus der Blende 6 zugeordnete Schalter geschlossen, so daß die Blende 6 aus dem Strahlengang ausgefahren wird. Dies kann aufgrund der Trägheit der mechanischen Blende beispielsweise 20 Millisekunden dauern. Während dieser Zeit ist eine Laserstrahlungserzeugung nicht möglich, da der Betriebsstrom der Pumplampe unter dem Schwellstrom liegt. Die Temperaturverteilung im Festkörperkristall 1 ändert sich aber während dieses kurzen Zeitraumes kaum, so daß insgesamt die Temperaturbedingungen erhalten bleiben, die sich aufgrund des längeren Stand-By-Betriebes als Gleichgewichtsbedingungen eingestellt haben.

Wenn die Blende 6 aus dem Laserstrahlengang entfernt ist, wird der Betriebsstrom der Pumplampe für die gewünschte Pulsdauer über den Schwellstrom erhöht, und zwar unter Umständen erheblich. Beim Überschreiten des Schwellstromes setzt sofort Laserwirkung ein, die während der gesamten Zeit des erhöhten Betriebsstromes der Pumplampe erhalten bleibt (Phase III in Figur 2).

Zur Beendigung des Laserpulses wird der Betriebsstrom wieder unter den Schwellstrom abgesenkt, gleichzeitig wird der dem Bewegungsmechanismus der Blende 6 zugeordnete Schalter geschlossen, so daß die Blende 6 wieder in den Strahlengang eingefahren wird (Betriebsphase IV in Figur 2).

Sobald der Laserstrahlengang unterbrochen ist, wird dann der Betriebsstrom der Pumplampe wieder über den Schwellstrom erhöht, und zwar wieder auf den Stand-By-Wert der Phase I. In diesem Zustand verbleibt der Laser bis zur Erzeugung des nächsten Laserpulses, bis also die Betriebsphasen II bis IV neu durchgeführt werden.

Die Anstiegszeit, die Abschaltzeit und die Dauer des Laserpulses werden bei dieser Verfahrensführung praktisch ausschließlich durch die entsprechenden Eigenschaften der Pumplampe und des Netzgerätes bestimmt, das heißt die relativ träge und zeitaufwendige Wirkung der mechanischen Unterbrecher spielt keine Rolle bei diesen charakteristischen Größen des Laserpulses.

Damit ist es möglich, auch sehr kurze, leistungsstarke Pulse zu erzeugen, die in der beschriebenen Weise zur Steinzertrümmerung, zur Erzeugung von Mikroanastomosen oder zum punktweisen Mikroschweißen verwendet werden können.

## Patentansprüche

1. Verfahren zur Erzeugung kurzer Laserpulse mit Hilfe eines Dauerstrich-Festkörperlasers, der einen in einem Resonator zwischen Spiegeln (4,5) angeordneten Laserkristall (1) und eine diesen mit Strahlung beaufschlagende Pumplampe (3) umfaßt, die mit unterschiedlich großen Strömen betrieben wird, wobei sie ab Erreichen eines Schwellstromes den Laserkristall ausreichend bestrahlt, um ihn zur Aussendung von Laserstrahlung anzuregen,
**dadurch gekennzeichnet**, daß man
a) die Pumplampe mit einem Strom oberhalb des Schwellstromes betreibt und gleichzeitig den Laserstrahlengang im Resonator unterbricht,
b) den Betriebsstrom der Pumplampe unter den Schwellstrom absenkt,
c) die Unterbrechung des Laserstrahlenganges aufhebt,
d) nach Freigabe des Laserstrahlenganges den Betriebsstrom der Pumplampe für die gewünschte Dauer über den Schwellstrom erhöht und anschließend wieder unter den Schwellstrom absenkt,
e) den Laserstrahlengang im Resonator unterbricht und nach vollständiger Unterbrechung des Laserstrahlenganges den Betriebsstrom der Pumplampe wieder über den Schwellstrom erhöht und ihn bis zur Erzeugung des nächsten Pulses bei unterbrochenem Laserstrahlengang aufrechterhält (Verfahrensschritt a).

2. Verfahren nach Anspruch 1, dadurch gekennzeichnet, daß man der Betriebsstrom der Pumplampe zwischen den Pulsen nur geringfügig über den Schwellstrom erhöht und er dabei geringer ist als der Betriebsstrom der Pumplampe während des Pulses.

3. Verfahren nach Anspruch 1 oder 2, dadurch gekennzeichnet, daß man den Resonatorstrahlengang durch Einbringen einer Blende (6) in den Resonator unterbricht.

4. Vorrichtung zur Erzeugung von Laserstrahlungsimpulsen mit einem Dauerstrich-Festkörperlaser, der einen in einem Resonator zwischen Spiegeln (4, 5) angeordneten Laserkristall (1) und eine diesen mit Strahlung beaufschlagende Pumplampe (3) umfaßt, die von einem elektrischen Versorgungsgerät mit unterschiedlich großen Strömen betrieben wird, wobei sie ab Erreichen eines Schwellstromes den Laserkristall (1) ausreichend bestrahlt, um ihn zur Aussendung von Laserstrahlung anzuregen, dadurch gekennzeichnet, daß das Versorgungsgerät den Betriebstrom so einstellt und ein Schalter eine den Laserstrahlengang im Resonator unterbrechende Vorrichtung (6) so betätigt, daß nacheinander
a) die Pumplampe (3) mit einem Strom oberhalb des Schwellstromes betrieben wird und gleichzeitig der Laserstrahlengang im Resonator unterbrochen wird,
b) der Betriebsstrom der Pumplampe (3) unter den Schwellstrom absinkt,
c) die Unterbrechung des Laserstrahlenganges aufgehoben wird,
d) nach Freigabe des Laserstrahlenganges der Betriebsstrom der Pumplampe (3) für die gewünschte Dauer über den Schwellstrom erhöht und anschließend wieder unter den Schwellstrom abgesenkt wird,
e) der Laserstrahlengang im Resonator unterbrochen wird und
f) nach vollständiger Unterbrechung des Laserstrahlenganges der Betriebsstrom der Pumplampe (3) wieder über den Schwellstrom erhöht und bis zur Erzeugung des nächsten Pulses bei unterbrochenem Laserstrahlengang aufrechterhalten wird (Schritt a).

5. Vorrichtung nach Anspruch 4, dadurch gekennzeichnet, daß der Betriebsstrom der Pumplampe zwischen den Pulsen nur geringfügig über den Schwellstrom erhöht wird und er dabei geringer ist als der Betriebsstrom der Pumplampe (3) während des Pulses.

6. Vorrichtung nach Anspruch 4 oder 5, dadurch gekennzeichnet, daß die den Resonatorstrahlengang im Resonator unterbrechende Vorrichtung (6) eine in den Strahlengang einschiebbare Blende ist.

## Claims

1. A process for the generation of short laser pulses with the aid of a continuous-wave solid laser which comprises both a laser crystal (1) arranged in a cavity resonator between mirrors (4, 5) and a pump lamp (3) acting upon the laser crystal with radiation and being operated with currents of varying magnitude, after a threshold current has been reached the pump lamp irradiating the laser crystal sufficiently to induce it to emit laser radiation,
characterised in that
a) the pump lamp is operated with a current above the threshold current and simultaneously the laser-beam path in the cavity resonator is interrupted,
b) the operating current of the pump lamp is lowered below the threshold current,
c) the interruption of the laser-beam path is lifted,
d) after unblocking of the laser-beam path, the operating current of the pump lamp is raised above the threshold current for the desired period of time and then lowered below the threshold current again,
e) the laser-beam path is interrupted in the cavity resonator and
f) after complete interruption of the laser-beam path, the operating current of the pump lamp is raised above the threshold current again and is maintained at this level - accompanied by interrupted laser-beam path - until the next pulse is generated (process step a).

2. A process in accordance with Claim 1, characterised in that between the pulses the operating current of the pump lamp is raised only slightly above the threshold current and is thereby lower than the operating current of the pump lamp during the pulse.

3. A process in accordance with Claim 1 or 2, characterised in that the cavity resonator beam path is interrupted by the introduction of a shield (6) into the cavity resonator.

4. A device for the generation of laser radiation pulses by means of a continuous-wave solid laser which comprises both a laser crystal (1) arranged in a cavity resonator between mirrors (4, 5) and a pump lamp (3) acting upon the laser crystal with radiation and being operated with currents of varying magnitude by an electric supply apparatus, after a threshold current has been reached the pump lamp irradiating the laser crystal (1) sufficiently to induce it to emit laser radiation, characterised in that a switch operates a device (6) - which interrupts the laser-beam path in the cavity resonator - in such a manner and the supply apparatus regulates the operating current in such a manner that successively
a) the pump lamp (3) is operated with a current above the threshold current and simultaneously the laser-beam path in the cavity resonator is interrupted,
b) the operating current of the pump lamp (3) falls below the threshold current,
c) the interruption of the laser-beam path is lifted,
d) after unblocking of the laser-beam path, the operating current of the pump lamp (3) is raised above the threshold current for the desired period of time and then lowered below the threshold current again,
e) the laser-beam path is interrupted in the cavity resonator and
f) after complete interruption of the laser beam-path, the operating current of the pump lamp (3) is raised above the threshold current again and is maintained at this level - accompanied by interrupted laser-beam path - until the next pulse is generated (step a).

5. A device in accordance with Claim 4, characterised in that between the pulses the operating current of the pump lamp is raised only slightly above the threshold current and is thereby lower than the operating current of the pump lamp (3) during the pulse.

6. A device in accordance with Claim 4 or 5, characterised in that the device (6) interrupting the cavity resonator beam path in the cavity resonator is a shield insertable into the beam path.

## Revendications

1. Procédé pour produire de courtes impulsions laser à l'aide d'un laser solide capable d'émettre pendant un long laps de temps, comportant un cristal laser (1) disposé dans un résonateur, entre des miroirs (4, 5), et une lampe de pompage (3) excitant ce cristal laser par un rayonnement, cette lampe étant amenée à fonctionner avec des courants d'intensités différentes, ladite lampe réalisant, à partir d'un courant de seuil, une irradiation suffisante du cristal laser pour l'exciter à émettre du rayonnement laser, caractérisé par le fait que
a) on fait fonctionner la lampe de pompage avec un courant supérieur au courant de seuil et, en même temps, on interrompt le trajet du rayon laser dans le résonateur,
b) on abaisse le courant de fonctionnement de la lampe de pompage en dessous du courant de seuil,
c) on supprime l'interruption du trajet du rayon laser,
d) après libération du trajet du rayon laser, on accroît, pendant la durée désirée, le courant de fonctionnement de la lampe de pompage au-dessus du courant de seuil, après quoi on le ramène en dessous de ce courant de seuil,
e) on interrompt le trajet du rayon laser dans le résonateur et
f) après interruption complète du trajet du rayon laser, on augmente de nouveau le courant de fonctionnement de la lampe de pompage au-dessus du courant de seuil et on le maintient ainsi, avec le trajet du rayon laser interrompu, jusqu'à la production de l'impulsion suivante (étape de procédé a).

2. Procédé selon revendication 1, caractérisé par le fait qu'entre les impulsions, on n'accroît le courant de fonctionnement de la lampe de pompage que légèrement au-dessus du courant de seuil, ce courant de fonctionnement étant alors plus faible que le courant de fonctionnement de la lampe de pompage pendant l'impulsion.

3. Procédé selon revendication 1 ou 2, caractérisé par le fait que l'on interrompt le trajet du rayon du résonateur par introduction d'un écran (6) dans le résonateur.

4. Dispositif pour produire des impulsions de rayon laser avec un laser solide capable d'émission longue, qui comporte un cristal laser (1) disposé dans un résonateur, entre des miroirs (4, 5), et une lampe de pompage (3) irradiant ce cristal, laquelle opère à partir d'un appareil d'alimentation électrique avec des courants d'intensités différentes, cette lampe réalisant, à partir d'un courant de seuil, une irradiation suffisante du cristal laser (1) pour exciter celui-ci pour qu'il émette un rayonnement laser, caractérisé par le fait que l'appareil d'alimentation règle le courant de fonctionnement et qu'un interrupteur actionne un dispositif (6) interrompant dans le résonateur le trajet du rayon laser, de manière que successivement
a) la lampe de pompage (3) opère avec un courant supérieur au courant de seuil et que le trajet du rayon laser dans le résonateur soit en même temps interrompu;
b) le courant de fonctionnement de la lampe de pompage (3) passe en dessous du courant de seuil,
c) l'interruption du trajet de rayon laser soit supprimée,
d) après libération du trajet du rayon laser, le courant de fonctionnement de la lampe de pompage (3) soit accru au-dessus du courant de seuil, pendant la durée désirée, et ensuite abaissé en dessous du courant de seuil,
e) le trajet du rayon laser dans le résonateur soit interrompu, et
f) après interruption complète du trajet du rayon laser, le courant de fonctionnement de la lampe de pompage (3) soit de nouveau rendu supérieur au courant de seuil et maintenu ainsi, le trajet du rayon laser étant interrompu, jusqu'à la production de l'impulsion suivante (étape a).

5. Dispositif selon revendication 4, caractérisé par le fait qu'entre les impulsions, le courant de fonctionnement de la lampe de pompage n'est que légèrement accru au-dessus du courant de seuil et se trouve alors plus faible que le courant de fonctionnement de ladite lampe de pompage (3) pendant l'impulsion.

6. Dispositif selon revendication 4 ou 5, caractérisé par le fait que le dispositif (6) interrompant le trajet du rayon dans le résonateur est un écran apte à être introduit dans le trajet du rayon.
